# EUROPÄISCHE PATENTSCHRIFT

(11) **EP 0 780 600 B1**
(45) Veröffentlichungstag und Bekanntmachung des Hinweises auf die Patenterteilung: **22.03.2000**
(21) Anmeldenummer: 96118219.3
(22) Anmeldetag: 13.11.1996
(51) Int. Cl.: F16H 59/02

(54) **Schalteinrichtung für ein Kraftfahrzeug mit automatischem Getriebe**
Selector arrangement for a motor vehicle with an automatic gearbox
Dispositif de commande pour transmission automatique de véhicule automobile

(30) Priorität: 20.12.1995 DE 19547750
(43) Veröffentlichungstag der Anmeldung: 25.06.1997
(73) Patentinhaber: Bayerische Motoren Werke Aktiengesellschaft, 80788 München (DE)
(72) Erfinder: Duenzl, Hans, White Plains (US)
(74) Vertreter: Bullwein, Fritz

(56) Entgegenhaltungen:
- EP-A- 0 413 115
- EP-A- 0 685 664
- DE-A- 3 717 675
- DE-A- 4 035 747
- GB-A- 2 282 195

## Beschreibung

Die Erfindung betrifft eine Schalteinrichtung für ein Kraftfahrzeug mit automatischem Getriebe gemäß dem Oberbegriff des Anspruchs 1.

Aus der DE 37 17 675 C2 ist eine entsprechende Schalteinrichtung mit zwei Schaltgassen bekannt, nämlich einer Schaltgasse für die verschiedenen Automatikgetriebeprogramme und einer Schaltgasse für eine manuelle Schaltbarkeit. Am oberen Ende des Wählhebels ist ein Tastschalter angeordnet ist, mit dem im Automatikprogrammbetrieb zwischen dem E- und dem S-Programm (also dem "Economy"- oder dem "Sport"-Programm) gewählt werden kann.

Nachteilig hierbei ist, daß der Bediener des Kraftfahrzeugs durch Betätigung von verschiedenen Bedienelementen das jeweils für ihn passende Getriebeprogramm auswählen muß. Dabei ist es möglich, daß er sich nicht mehr darüber im klaren ist, welches Programm gerade aktiviert wurde, oder, daß für die Getriebeeinstellung seine ganze Aufmerksamkeit in Anspruch genommen wird. Im Extremfall kann dadurch eine Gefährdung im Straßenverkehr hervorgerufen werden.

In der EP 0 685 664 A2 ist eine Schaltvorrichtung für ein automatisches Getriebe mit einer Automatik-Schaltgasse und einer mit der Automatik-Schaltgasse gekoppelten manuellen Schaltkulisse beschrieben. Zur funktionellen Verschmelzung der Wählgasse mit Automatik-Funktion und der Schaltkulisse für die Manuell-Funktionen ist im Kreuzungspunkt einer Wähl- und einer Schaltgasse eine Gangschaltstellung vorgesehen, in der ein Automatik-Programm, insbesondere ein leistungsorientiertes Fahrprogramm, ausgewählt wird. Das leistungsorientierte Fahrprogramm wird jedesmal eingelegt, wenn in die Gangschaltstellung verfahren wird. Insbesondere wird es bei bestimmten Fahrzeugbetriebsbedingungen vom Fahrzeug selbst eingelegt.

Aufgabe der Erfindung ist es, eine Schalteinrichtung für ein Kraftfahrzeug mit automatischem Getriebe und einer manuellen Schaltgasse anzugeben, mit der eine fahrerwunschgerechte Fahrstufeneinstellung möglich ist.

Diese Aufgabe wird durch die im Anspruch 1 genannten Merkmale gelöst.

Erfindungsgemäß wird allein durch Betätigen des Wählhebels von einer ersten in eine zweite Schaltgasse ein bestimmtes und vom jeweiligen Benutzer gewünschtes Getriebeprogramm ausgewählt. Es müssen nicht mehr mehrere Bedienelemente gleichzeitig betätigt bzw. berücksichtigt werden. Dies erleichtert zum einen die Bedienerfreundlichkeit, und zum anderen wird die Sicherheit des gesamten Systems erhöht, da der Fahrer nicht mehr unnötig abgelenkt wird. Insbesondere wird die Wahl des Getriebebetriebs durch die Stellung des Wahlhebels zwischen den beiden Schaltgassen bestimmt.

Gemäß einer vorteilhaften Ausführungsform der Erfindung wird die Stellung des Wählhebels durch einen Detektor erfaßt, welcher ein entsprechendes Signal an die elektronische Steuereinheit liefert. Damit wird auf einfache und kostengünstige Weise eine Meldung über die Position des Wählhebels bzw. über den Umschaltvorgang an die Steuereinrichtung weitergegeben. Diese kann aufgrund des entsprechenden Signals den jeweiligen Getriebebetrieb aktivieren.

Eine besonders vorteilhafte Ausführungsform zeichnet sich dadurch aus, daß beim Schalten von der ersten in die zweite Schaltgasse zunächst das Automatikgetriebeprogramm "Sport" für die sportliche Fahrweise aktiviert wird. Damit wird vom Bediener des Kraftfahrzeugs bereits ein Schritt in Richtung einer sportlicheren Fahrweise veranlaßt, nämlich die Umschaltung der Steuereinheit beispielsweise von einem "Economy-Programm" in ein "Sport-Programm".

Erfindungsgemäß hat der Bediener des Kraftfahrzeugs nun zu einer noch sportlicheren Fahrweise Zugang dadurch, daß er den Wählhebel in der zweiten Schaltgasse betätigt. Dadurch wird das bestimmte Automatikgetriebeprogramm deaktiviert.

Beim darauffolgenden Schritt sind zwei Alternativen bevorzugt. Gemäß einer ersten Alternative ist die Steuereinheit so ausgebildet, daß gleichzeitig mit dem ersten Verschwenken des Wählhebels in der zweiten Schaltgasse eine Hoch- oder Rückschaltung durchgeführt wird. Dies resultiert in einer besonders spontanen Schaltung, da bereits bei der ersten Betätigung des Wählhebels die entsprechende Hoch- oder Rückschaltung erfolgt.

Die andere Variante zeichnet sich dadurch aus, daß erst bei der zweiten Betätigung des Wählhebels in der zweiten Schaltgasse eine Hoch- oder Rückschaltung durchgeführt wird. Diese Variante führt zu mehr Sicherheit, da die von der bisherigen Steptronic bekannte Ganghaltefunktion beibehalten werden kann.

Eine weitere vorteilhafte Ausführungsform der Erfindung ist darin zu sehen, daß beim Umschalten des Wählhebels von der zweiten in die erste Schaltgasse das ursprüngliche Automatikgetriebeprogramm ausgewählt wird.

Die Erfindung wird im folgenden anhand der beigefügten Zeichnungen, auch bezüglich weiterer Vorteile und Merkmale erläutert, wobei die
- Fig. 1: einen die Schaltbetätigungsvorrichtung enthaltenden Ausschnitt aus dem Innenraum eines Kraftfahrzeugs darstellt und
- Fig. 2: eine Leuchtpunkt-Wählpositionsanzeige mit einem Schaltschema ist.

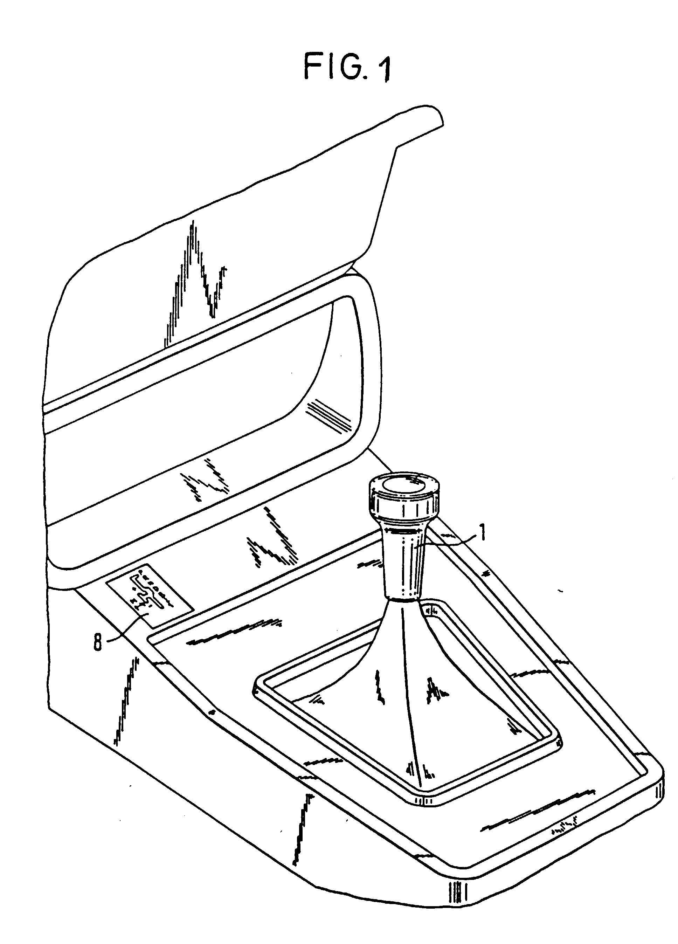

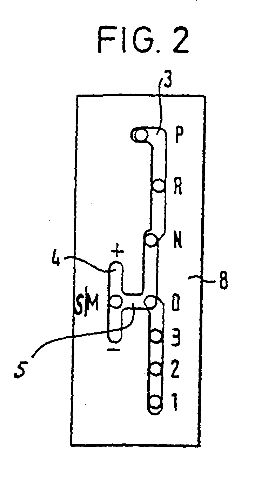

Die Fig. 1 zeigt einen die Schaltbetätigungsvorrichtung enthaltenden Ausschnitt aus dem Innenraum eines Kraftfahrzeugs. Am linken Rand der Konsole ist eine Leuchtpunkt-Wählpositionsanzeige 8 mit einem Schaltschema dargestellt. Ein Wählhebel 1 ist um seinen Drehpunkt (nicht dargestellt) kardangelenkartig schwenkbar gelagert. Im Bereich seines unteren Endes befindet sich eine horizontale Schaltkulisse (nicht dargestellt), die der Leuchtpunkt-Wählpositionsanzeige 8 derart entspricht, daß sich der Wählhebel 1 in der vorgegebenen Weise schalten läßt. Gemäß Fig. 2 umfaßt die Schaltkulisse zwei Schaltgassen 3 und 4. In der ersten Schaltgasse 3, der Automatik-Schaltgasse, ist die übliche Anordnung der einzelnen Wählhebel-Schaltpositionen für die zugeordneten Automatikgetriebeprogramme zu erkennen; die erste Schaltgasse 3 enthält die Schaltpositionen "P"; "R", "N", "D", "3", "2", "1".

In den Schaltpositionen 3, 2 und 1 werden die möglichen Hochschaltungen begrenzt bzw. nicht zugelassen, wobei in der Position 1 die Kupplung für Kraftübertragung bei Schubbetrieb im ersten Gang geschlossen wird. Solange sich der Wählhebel 1 in der Automatikschaltgasse 3 befindet ist bei dem als Beispiel verwendeten elektrohydraulisch gesteuerten automatischen Vier-Gang-Getriebe das "Economy"-Programm ausgewählt. Von der Wählhebel-Schaltposition "D" ist der Wählhebel 1 über eine Quergasse 5 in die zweite Schaltgasse 4 umschaltbar.

Im Bereich der Quergasse ist ein Detektor vorgesehen (nicht dargestellt), welcher den Umschaltvorgang des Wählhebels 1 zwischen den beiden Schaltgassen 3 und 4 erfaßt und an ein das automatische Getriebe steuernde elektronische Steuergerät weitergibt. Aufgrund dieses Signals, also des Wechsels von der Schaltgasse 3 in die Schaltgasse 4, wird in dem Steuergerät zunächst der Automatikbetrieb beibehalten, jetzt jedoch unter Aktivieren des S-Programms ("Sport"-Programm). Obwohl sich der Wählhebel 1 nunmehr in der für die manuelle Schaltung vorgesehenen Schaltgasse 4 befindet, ist also zunächst noch der Automatikbetrieb eingeschaltet. Dies soll durch die Bezeichnung S/M in Fig. 2 verdeutlicht werden. Dabei liegt folgende Überlegung zugrunde: Wünscht der Kraftfahrzeugbediener ausgehend von dem normalen Automatikbetrieb im E-Programm eine sportlichere Fahrweise, so schaltet er zunächst in die zweite Schaltgasse 4 für den manuellen Betrieb und erreicht dadurch zunächst eine Umschaltung des Automatikbetriebs in das S-Programm. Reicht dem Benutzer dieses gegenüber dem E-Programm sportlichere Programm nicht aus, so kann er durch nochmaliges Betätigen des Wählhebels 1 zu einer noch sportlicheren Fahrweise mittels des manuellen Programms übergehen. Durch das Einfügen des S-Programms zwischen das normale Automatikgetriebeprogramm und den manuellen Getriebebetrieb tritt kein Zeitverlust auf, da ein Wechsel des Wählhebels 1 zwischen den beiden Schaltgassen 3 und 4 sowieso erforderlich ist.

Alternativ kann auf die Verwendung eines separaten Detektors im Bereich der Quergasse verzichtet werden, wenn die Stellung des Wählhebels 1 durch Detektoren in der Schaltkulisse feststellbar ist.

Durch Betätigen des Wählhebels 1 in der Schaltgasse 4 wird im Steuergerät das Automatikgetriebeprogramm (S-Programm) deaktiviert und der manuelle Getriebebetrieb ermöglicht. Nunmehr kann durch manuelles Hoch- und Zurückschalten des Wählhebels (1) das Getriebe geschaltet werden. In einer ersten Variante erfolgt die Deaktivierung des Automatikgetriebeprogramms, das heißt der Wechsel in den manuellen Betrieb gleichzeitig mit einer entsprechenden Hoch- bzw. Zurückschaltung. Alternativ kann auch zuerst durch eine erste Betätigung des Wählhebels 1 eine Deaktivierung des Automatikgetriebeprogramms erfolgen und dann durch eine weitere Betätigung die erste Hoch- bzw. Zurückschaltung.

Will der Bediener zu einem späteren Zeitpunkt wieder zum ursprünglichen, beispielsweise dem "Economy"-Automatikprogramm zurückkehren, so braucht er lediglich den Wählhebel 1 in die erste Schaltgasse 3 umschalten, was vom nicht dargestellten Detektor erfaßt und an das Steuergerät gemeldet wird. Durch das vom Detektor ausgesendete Signal wird die Umschaltung in das ursprüngliche Automatik-Programm ausgelöst. Der Wählhebel 1 ist dann wieder in der "D"-Position, von der er in gewohnter Weise den Wählhebel 1 in der ersten Schaltgasse 3 verschwenken werden kann.

In vorbeschriebener Weise ermöglicht es die Erfindung auf einfache Art das S-Programm auch ohne zusätzliche Tastenbetätigung durch einfaches Umlegen des Wählhebels 1 zu aktivieren, ohne daß ein zusätzlicher Schaltaufwand notwendig wäre oder Zeit verloren ginge. Vom E-Programm kommt man somit unter Zwischenschaltung des S-Programms, was auch einer stufenweisen Erhöhung der Sportlichkeit entspricht, zum manuellen Programm. Der Vorteil vorliegender Lösung ist ferner, daß keine Hardwareänderung gegenüber herkömmlichen Schalteinrichtungen erforderlich ist, so daß keine Zusatzkosten entstehen.

## Patentansprüche

1. Schalteinrichtung für ein durch eine elektronische Steuereinheit gesteuertes automatisches Getriebe eines Kraftfahrzeugs mit einem Wählhebel (1), der in einer ersten Schaltgasse (3) verschwenkbar ist, wodurch Automatikgetriebeprogramme einstellbar sind, und
der über eine Quergasse in eine zweite Schaltgasse (4) umschaltbar ist, in der durch Verschwenken des Wählhebels (1) die Vorwärtsgänge des Getriebes manuell schaltbar sind,
dadurch gekennzeichnet, daß
die Steuereinheit lediglich beim Umschalten von der ersten Schaltgasse (3) in die zweite Schaltgasse (4) ein bestimmtes Automatikgetriebeprogramm aktiviert und
dieses Automatikgetriebeprogramm beim ersten Betätigen des Wählhebels (1) in der zweiten Schaltgasse (4) deaktiviert, so daß ein manueller Betrieb ermöglicht ist, in dem durch Verschwenken des Wählhebels Hoch- (+) oder Rückschaltungen (-) manuell durchführbar sind.

2. Schalteinrichtung nach Anspruch 1,
dadurch gekennzeichnet, daß das Umschalten des Wählhebels (1) zwischen den beiden Schaltgassen (3, 4) von einem Detektor erfaßt wird

3. Schalteinrichtung nach Anspruch 1 oder 2,
dadurch gekennzeichnet, daß das bestimmte Automatikgetriebeprogramm ein Sportprogramm ist.

4. Schalteinrichtung nach einem der Ansprüch 1 bis 3,
dadurch gekennzeichnet, daß die Steuereinheit beim ersten Verschwenken des Wählhebels (1) in der zweiten Schaltgasse (4) gleichzeitig eine Hoch- oder Rückschaltung durchführt.

5. Schalteinrichtung nach einem der Ansprüche 1 bis 3,
dadurch gekennzeichnet, daß die Steuereinheit beim zweiten Verschwenken des Wählhebels (1) in der zweiten Schaltgasse (4) eine Hoch- oder Rückschaltung durchführt.

6. Schalteinrichtung nach einem der Ansprüche 1 bis 5,
dadurch gekennzeichnet, daß die Steuereinheit beim Umschalten des Wählhebels (1) von der zweiten Schaltgasse (4) in die erste Schaltgasse (3) das ursprüngliche Getriebeprogramm auswählt.

## Claims

1. A shift device for an automatic gear unit controlled by an electronic control unit in a motor vehicle, comprising a selector lever (1) movable in a first shift channel (3) so as to set automatic gear programs and switchable through a transverse channel into a second shift channel (4) in which the forward gears are manually shiftable by moving the selector lever (1), characterised in that the control unit, simply after the changeover from the first shift channel (3) to the second channel (4), activates a given automatic gear program and inactivates the said program when the selector lever (1) is first shifted in the second channel (4) so that manual operation is possible, where a change to a higher or a lower gear can be made manually by shifting the selector lever.

2. A shift device according to claim 1, characterised in that the changeover of the lever (1) between the two shift channels (3, 4) is detected by a detector.

3. A shift device according to claim 1 or 2, characterised in that the given automatic gear program is a sports program.

4. A shift device according to any of claims 1 to 3, characterised in that the control unit simultaneously changes to a higher or lower gear when the selector lever (1) is first moved in the second shift channel (4).

5. A shift device according to any of claims 1 to 3, characterised in that the control unit changes to higher or lower gear when the selector lever (1) is shifted for the second time in the second channel (4).

6. A shift device according to any of claims 1 to 5, characterised in that the control unit selects the original gear program when the shift lever (1) is shifted from the second channel (4) to the first channel (3).

## Revendications

1. Dispositif de commande d'une transmission automatique à commande électronique d'un véhicule automobile, comportant un levier sélecteur (1) qui peut basculer à l'intérieur d'une première ligne de changement (3) dans laquelle on peut sélectionner des programmes d'automatisme et qui peut, en suivant un passage transversal, être amené dans une seconde ligne de changement (4) où les rapports de marche avant de la transmission peuvent être commandés manuellement par le levier sélecteur (1),
caractérisé en ce que
le simple passage de la première ligne de changement (3) à la seconde ligne (4) fait que l'unité de commande électronique active un programme prédéterminé de transmission automatique qui est désactivé dès qu'on manoeuvre le levier sélecteur (1) dans la seconde ligne de changement (4), rendant ainsi possible un fonctionnement manuel permettant, en manoeuvrant le levier sélecteur, de monter (+) ou de descendre (-) les rapports de transmission.

2. Dispositif selon la revendication 1,
caractérisé en ce que
le levier sélecteur (1) est saisi par un détecteur entre les deux lignes de changement (3, 4).

3. Dispositif selon les revendications 1 ou 2,
caractérisé en ce que
le programme prédéterminé de transmission automatique est un programme de type sport.

4. Dispositif selon l'une des revendications 1 à 3,
caractérisé en ce que
l'unité de commande, au premier basculement du levier sélecteur (1) dans la seconde ligne de changement (4), exécute en même temps une montée ou une descente du rapport.

5. Dispositif selon l'une des revendications 1 à 3,
caractérisé en ce que
l'unité de commande, au second basculement du levier sélecteur (1) dans la seconde ligne de changement, exécute une montée ou une descente du rapport.

6. Dispositif selon une des revendications 1 à 5,
caractérisé en ce que
l'unité de commande, quand le levier sélecteur passe de la deuxième piste (4) à la première (3), sélectionne le programme initial de transmission.
